Europäisches Patentamt

European Patent Office

Office européen des brevets

(11) Publication number: **0 229 583**
A2

# EUROPEAN PATENT APPLICATION

(21) Application number: **86500005.3**

(51) Int. Cl.³: **A 01 K 1/02**

(22) Date of filing: **12.12.86**

(30) Priority: **13.12.85 ES 550886**

(43) Date of publication of application:
**22.07.87 Bulletin 87/30**

(84) Designated Contracting States:
**BE DE FR GB IT NL**

(71) Applicant: **Depoorter Lodenwijckx, Guido**
**La Balconada Urbanizacion Monestri**
**17251 Calonge(ES)**

(72) Inventor: **Depoorter Lodenwijckx, Guido**
**La Balconada Urbanizacion Monestri**
**17251 Calonge(ES)**

(74) Representative: **Morgades y Manonelles, Juan Antonio**
**Calle Valencia, 300 - entresuelo 1a**
**E-08009 Barcelona(ES)**

(54) Improvements in heated breeding pens for sucking pigs.

(57) The object of the invention is improvements in heated breeding pens for sucking pigs comprised by two plastic half housings which become the floor and roof, the latter being provided with a ventilation aperture and the former with a compensated heating plate, with temperature controls and built-in transformer.

EP 0 229 583 A2

The present Patent of Invention consists as stated in the title thereof of "IMPROVEMENTS IN HEATED BREEDING PENS FOR SUCKING PIGS".

The daily practice in the breeding of pigs on specialized farms involves the need to have specific heating equipment for the sucking pigs during the early months after farrowing since they require within the farm housing them a higher temperature than for the other already grown pigs.

At the present time there are on the market many systems or equipment to provide sucking pigs with a temperature varying between 27 and 35°C, for which, for such purpose, there are provided respective departments or stalls of a size proportional to the animals to be housed, generally 50 cm high and 50 cm wide, with the corresponding apertures with their fronts and heated by infrared lamps or electric elements installed in the ceiling of such departments or floors heated by water or conducting wires.

The equipment provided with overhead heating elements have serious drawbacks on being the origin of burns of the backs of the sucking pigs, at the same time as not allowing a leveled adjustment of the required heat. Furthermore, in the equipment provided with underfloor heating means there is required in the majority of cases complex piping systems for transporting the heat bearing liquids which prevent the movement of the departments or stalls in question both for maintenance work and for cleaning and disinfection operations.

To overcome the above drawbacks and starting out from the need to supply a uniform temperature of 27 to 35°C, without causing any type of burns, at the same time as the equipment replacing the previous ones should be easy to assemble and move without the need to be located in any set position, the object of the present invention has been devised which improves on the previous equipment by overcoming the abovementioned drawbacks.

The equipment in question is easy to assemble and comprises two flat bottomed open half housings having a regular trapezial cross section made from plastic material or the like, which are provided with appropriate ledges for mutual attachment to form a closed precinct.

The lower half housing will contain a set of internal stiffening ridges on which a heating element supplied with a voltage of below 48 V, radiant plate or the like will be supported, with the only condition of giving off the same amount of heat per unit area whatever the location of said surface, this plate forming the floor of the breeding pen.

Said heating element or plate is metallic and is coated with a vitrified enamel insulating layer and is provided with a compensated electric heating printed circuit, said compensation allowing excellent uniformity of temperature to be obtained all over the surface.

To ensure the above uniformity, in the heating element there has been installed a thermostat bulb to ensure that the plate will hold the temperature between 27 to 35$^{\circ}$ C, the body of the thermostat and a small light bulb to illuminate the pig-pen being housed in a small box incorporated in the lower half housing, as well as a small individual transformer and, likewise, when necessary the transformer may hang from the nearest wall.

All the parts, half housings, heater and floor will form a compact sealed package by way of respective fastening or quick release closing elements or by a half hinge which in turn facilitates the opening of the box for internal cleaning and for any evacuation of the sucking pigs remaining therein.

On the two front faces of the pig-pen there is an opening for access of the pigs therein. Said entrances are provided with the corresponding doors therefor, preferably of the guillotine type, for when it is desired to keep the sucking pigs enclosed therein. On the top of the upper half housing there are respective openings of adjustable section adequate for correct ventilation thereof.

Further details and features of this patent will be disclosed throughout the description hereafter, wherein reference is made to the drawings accompanying the specification in which, schematically, there are illustrated the preferred details. These details are given as an example, referring to one possible practical embodiment, but it is not limited to the details given here; therefore this description should be considered from an illustrative point of view without limitations of any type.

Figure 1 is a side elevation view of the breeding pen of the invention.

Figure 2 is a plan view from above of the top of the breeding pen.

Figure 3 is a front elevation view of the breeding pen.

Figure 4 is a detail of the opening and closing means of the breeding pen.

Figure 5 is a side elevation view, partly in cross section, of the upper half housing of the breeding pen.

Figure 6 is a side elevation view, partly in section of the bottom half housing of the breeding pen.

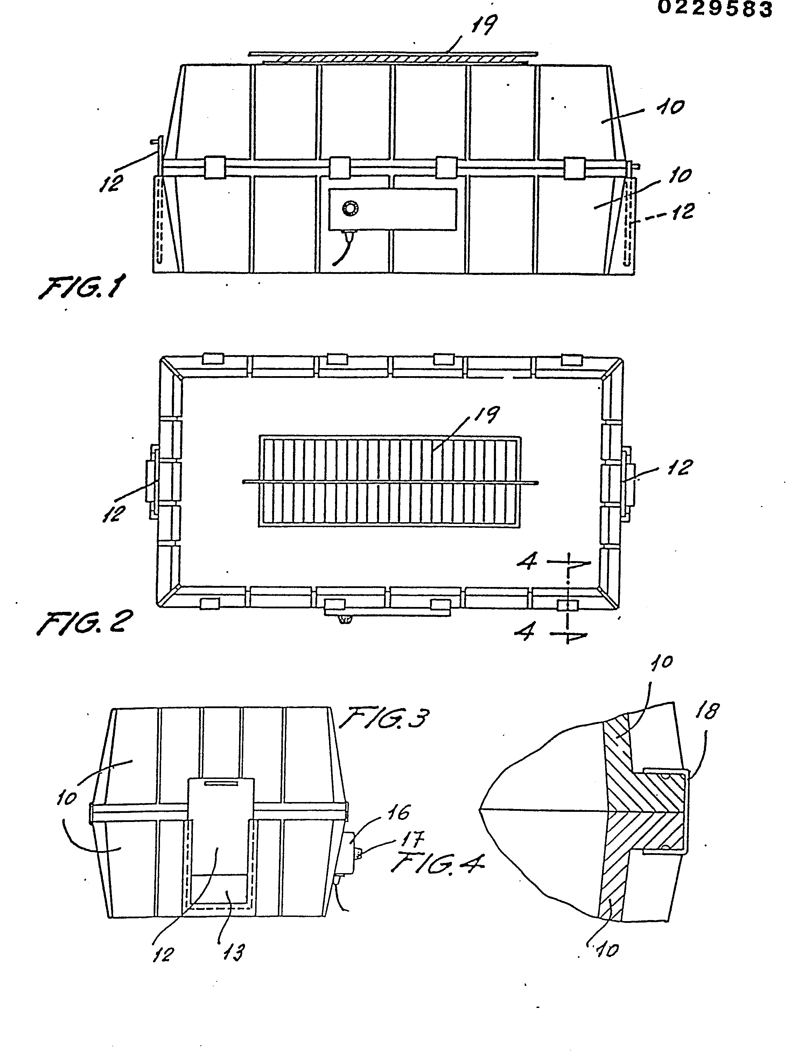

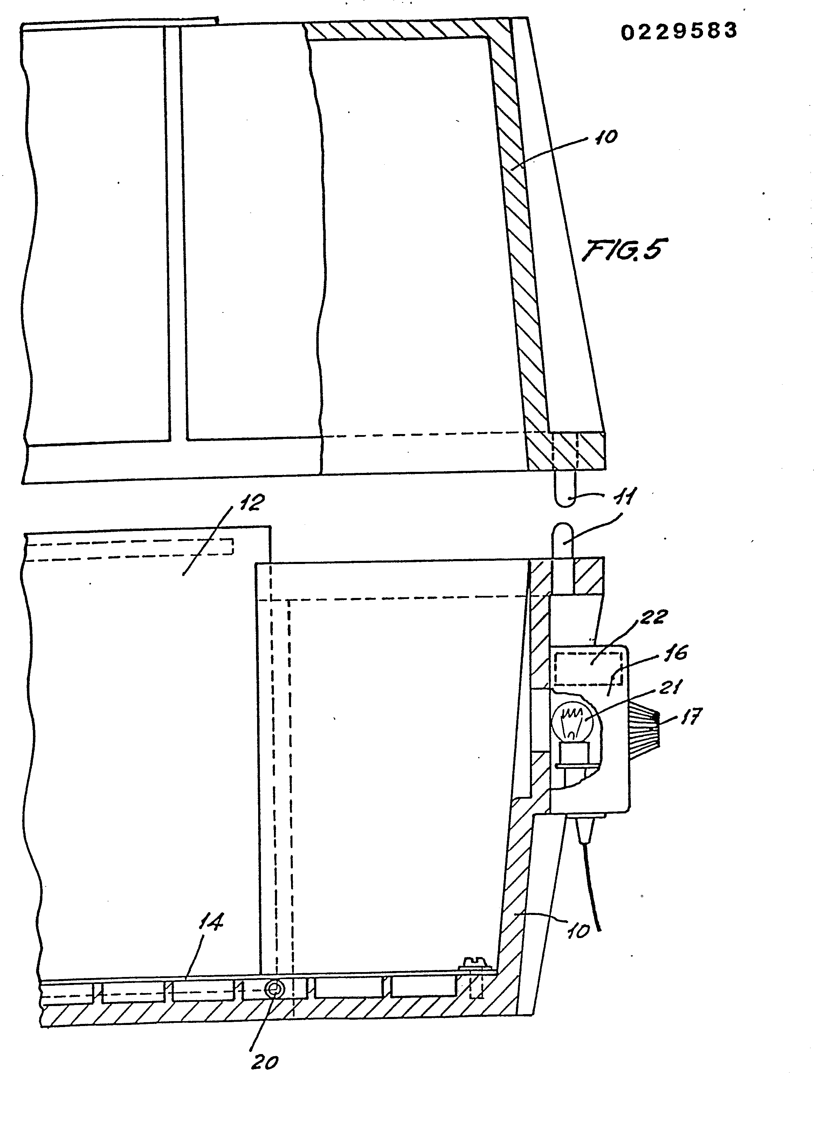

The equipment in question comprises two half housings (10) having a regular trapezial cross section, which are provided with the half hinges (11) for coupling them together, as well as the front doors (12) provided with respective openings (13) for the entry and exit of the young animals.

The lower half housing (10) comprises a heating plate (14) covering the whole of the flat surface of said half housing (10), acting as floor of the breeding pen and being attached thereto by the screws (15), there being mounted on the side wall (10) of a small box (16) housing the thermostat body receiving information from its bulb (20), the light bulb (21), the transformer (22) and the adjustment control (17). When necessary the transformer (22) may be hung from the nearest wall. The ventilation of the breeding pen is ensured by the adjustable opening (19).

Having sufficiently described the constitution of the present Patent in correspondence with the enclosed drawings, it is understood that any modifications of detail deemed to be desirable may be made therein provided that they do not alter the essence of the patent which is summarised in the following CLAIMS.

CLAIMS

1.- "IMPROVEMENTS IN HEATED BREEDING PENS FOR SUCKING PIGS" characterized in that it comprises two half housings (10) which become the floor and ceiling of the breeding boxes at the same time as the mutual coupling together is possible thanks to the half hinges (11). The upper half housing (10) has been provided with an adjustable opening (19), the two half houses opening and closing by way of the said half hinges. The lower half housing (10) incorporates the box (16) containing the light bulb (21), the body of the thermostat receiving the information from the bulb (20) thereof, the transformer (20) and the control means (17), it being possible to hang (22) from the closest wall when necessary.

2.- "IMPROVEMENTS IN HEATED BREEDING PENS FOR SUCKING PIGS", according to the previous claim, characterized in that the lower half housing (10) mounts the heating plate (14) which is the floor of the breeding pen by the screws (15), (14) being a metal plate covered by an insulating layer of vitrified enamel on which there has been printed on the lower face thereof the compensated heating circuit, operating at a voltage below 48 V, a constant temperature being attained by varying the supply voltage of the supply current or by the thermostat.

All as described in the present Specification which comprises eight sheets typed on one side only and two sheets of illustrative drawings.

0229583

**FIG.1**

19

10

12

10

12

**FIG.2**

19

12

12

4

4

**FIG.3**

10

10

12    13

16

17

**FIG.4**

10

18

10

0229583

2/2

10

FIG.5

11

12

22

16

21

17

14

20

10